# EUROPEAN PATENT APPLICATION

(11) **EP 3 995 959 A1**
(43) Date of publication of application: **11.05.2022**
(21) Application number: 21190616.9
(22) Date of filing: 10.08.2021
(51) Int. Cl.: G06F 9/54, G06Q 10/06

(54) **INFORMATION PROCESSING DEVICE, INFORMATION PROCESSING METHOD, NON-TRANSITORY STORAGE MEDIUM, AND VEHICLE**

(30) Priority: 10.11.2020 JP 2020187357
(71) Applicant: TOYOTA JIDOSHA KABUSHIKI KAISHA, Toyota-shi, Aichi-ken 471-8571 (JP)
(72) Inventor: MITSUTANI, Noritake, TOYOTA-SHI, AICHI-KEN, 471-8571 (JP)
(74) Representative: Cabinet Beau de Loménie

(57) **Abstract**

An information processing device to be mounted on a vehicle includes a processor (20). The processor (20) is configured to provide an activation instruction for an application based on an operation schedule of the vehicle. The processor (20) is configured to receive a first command as a request from the application activated in response to the activation instruction. The processor (20) is configured to convert the received first command into a second command used to control on the vehicle for fulfilling the request. The processor (20) is configured to control a device mounted on the vehicle based on the second command.

## Description

### 1. Field of the Invention

The present disclosure relates to an information processing device to be mounted on a vehicle, an information processing method, a non-transitory storage medium, and a vehicle.

### 2. Description of Related Art

Japanese Unexamined Patent Application Publication No. 2006-142994 (JP 2006-142994 A) discloses a vehicle network system to be developed in a shorter development period even in a case of development of a complicated large-scale system. In this vehicle network system, a distributed control platform structure having a plurality of layers is constructed for a network spanning a plurality of electronic control units (ECU), and cooperative control is implemented by assigning separate roles to the individual layers.

### SUMMARY OF THE INVENTION

The system described in JP 2006-142994 A is dedicated to implementation of a single complex action such as a vehicle motion through cooperation among the electronic control units and vehicle devices such as actuators. Therefore, it may be difficult to avoid control interference while securing consistency among a plurality of independent and different tasks.

The present disclosure provides an information processing device, an information processing method, a non-transitory storage medium, and a vehicle that can achieve appropriate vehicle control while securing consistency among a plurality of tasks.

An information processing device to be mounted on a vehicle according to a first aspect of the present disclosure includes a processor. The processor is configured to provide an activation instruction for an application based on an operation schedule of the vehicle. The processor is configured to receive a first command as a request from the application activated in response to the activation instruction. The processor is configured to convert the received first command into a second command used to control the vehicle for fulfilling the request. The processor is configured to control a device mounted on the vehicle based on the second command.

In the information processing device according to the first aspect of the present disclosure, the processor may be configured to manage an external condition of the vehicle and an internal condition of the vehicle. The external condition of the vehicle and the internal condition of the vehicle may include at least scene information. The processor may be configured to convert the first command into the second command based on the managed external condition and the managed internal condition.

In the information processing device according to the first aspect of the present disclosure, the processor may be configured to manage a control mode for providing at least an instruction for behavior of the vehicle. The processor may be configured to convert the first command into the second command based on the managed control mode.

An information processing method according to a second aspect of the present disclosure includes providing an activation instruction for an application based on an operation schedule of a vehicle, receiving a first command as a request from the application activated in response to the activation instruction, converting the received first command into a second command used to control the vehicle for fulfilling the request, and controlling a device mounted on the vehicle based on the second command.

A non-transitory storage medium according to a third aspect of the present disclosure stores instructions that are executable by one or more processors of an information processing device to be mounted on a vehicle and that cause the one or more processors to perform the following functions. The functions include providing an activation instruction for an application based on an operation schedule of the vehicle, receiving a first command as a request from the application activated in response to the activation instruction, converting the received first command into a second command used to control the vehicle for fulfilling the request, and controlling a device mounted on the vehicle based on the second command.

The information processing device according to the first aspect of the present disclosure is mounted on a vehicle.

According to the information processing device of the present disclosure, the instruction is provided only for the activation of the necessary application based on the operation schedule of the vehicle. Thus, appropriate vehicle control can be achieved while securing consistency among a plurality of tasks.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a functional block diagram of a vehicle control system including an information processing device according to one embodiment;
FIG. 2 illustrates an example of a detailed process flow among functional blocks when scheduling an operation of a mobility service;
FIG. 3 illustrates an example of a detailed process flow among the functional blocks when starting the operation of the mobility service;
FIG. 4 illustrates an example of an operation index stored in an information storage;
FIG. 5 illustrates an example of a detailed process flow among the functional blocks when terminating the operation of the mobility service;
FIG. 6 illustrates an example of a detailed process flow among the functional blocks when executing an operation of a transportation service in the mobility service;
FIG. 7 illustrates an example of a timetable of an operation schedule stored in the information storage;
FIG. 8A illustrates an example of departure determination conditions depending on service types;
FIG. 8B illustrates an example of arrival determination conditions depending on service types;
FIG. 9A illustrates an example of how to create a charging schedule in the mobility service using a related-art simulator;
FIG. 9B illustrates an example of how to create the charging schedule in the mobility service using a simulator of the present disclosure; and
FIG. 10 illustrates an example of revision of a transportation schedule using a method of the present disclosure.

### DETAILED DESCRIPTION OF EMBODIMENTS

An information processing device of the present disclosure provides functions of a control platform operable as a central brain configured to control overall operation and behavior of a vehicle. The functions of the control platform are provided by a vehicle integrated ECU (central ECU) alone, an external cloud alone, or a combination of the vehicle integrated ECU and the external cloud. The use of the control platform can achieve appropriate vehicle control while securing consistency among a plurality of tasks.

### Embodiment

### Configuration

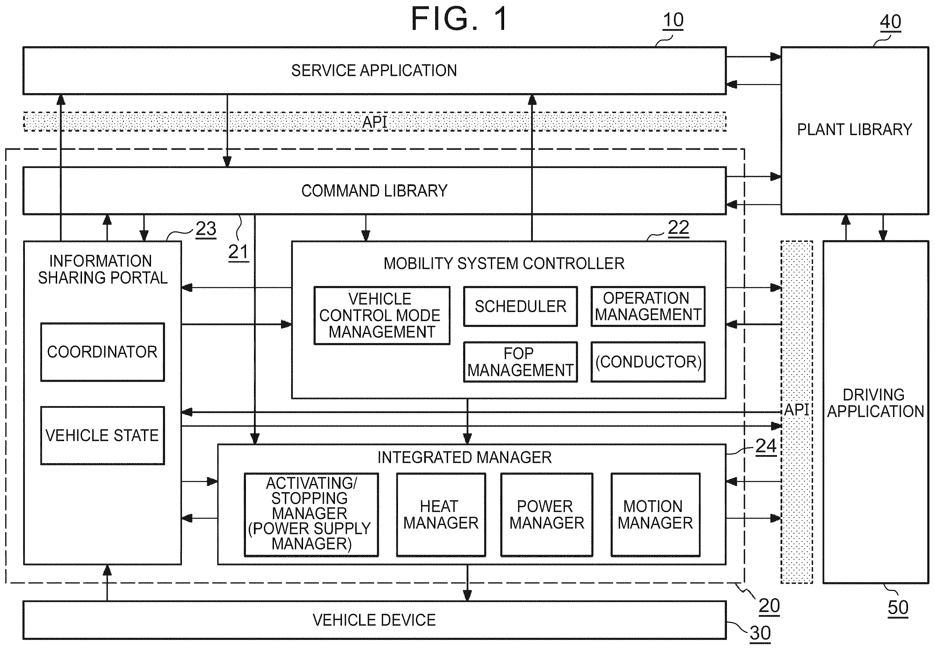

FIG. 1 is a functional block diagram of a vehicle control system including an information processing device 20 according to one embodiment of the present disclosure. The functional blocks exemplified in FIG. 1 include a service application 10, the information processing device 20, a vehicle device 30, a plant library 40, and a driving application 50. The information processing device 20 includes a command library 21, a mobility system controller 22, an information sharing portal 23, and an integrated manager 24. The vehicle control system may be mounted on a vehicle such as an automobile.

### 1. Service Application 10

The service application 10 is a functional block including applications that implement services. The services are implemented by using pieces of information on the inside and outside of the vehicle and components of the vehicle. Examples of the services include real-time operations of the vehicle as an automobile or product, scheduling related to activation of applications (self applications and other applications) based on set times, collection and processing of databases, recording into recording media, and wireless transmission to the outside. The application of this embodiment is configured to request (call) an abstract command predefined in the command library 21 from the information processing device 20 via an application programming interface (API). The abstract request may include supplementary information (for example, expected service execution period, priority, or frequency). For example, a service provider can provide any service by programming the application using an API depending on purposes. The contents of the API open to business entities or the like may be changed depending on levels of software developers. Thus, the developers of the business entities or the like can easily develop an application for implementing a new function. In the development, the developers of the business entities or the like need not be aware of an electronic platform mounted in the vehicle, the structures of devices in the vehicle (actuators or sensors), and an energy (electric or heat) system of the vehicle. Various applications may be exemplified as the applications. For example, the applications are related to a cockpit user experience (UX), a remote service, Mobility-as-a-Service (MaaS), an energy management service, an over-the-air (OTA) update service, vehicle operation scheduling, energy mobility, and a transportation service (departure determination or arrival determination).

The service application 10 requests various services from the command library 21. This request is an example of "first command" of the present disclosure. The service application 10 refers to shared information open to the public at the information sharing portal 23. The service application 10 can input a trigger for an instruction to activate an application from the mobility system controller 22 to the information sharing portal 23. The service application 10 can output a request to the vehicle device 30. The service application 10 can exchange information with the plant library 40. Each application in the service application 10 is basically executed in the vehicle, but may partially be executed in the cloud.

### 2. Command Library 21

The command library 21 is a functional block including an abstract API. This API implements control corresponding to the service request in response to the abstract service request (service API call) from the service application 10. In other words, the command library 21 is a converter configured to convert a request (first command) received from the service application 10 into a request (second command) for the integrated manager 24 or the mobility system controller 22. For example, the command library 21 includes a library of various commands for implementing the following functions in association.
(1) Function of implementing a single or complex operation command for the vehicle device 30 (such as an actuator). This operation command is a command for fulfilling a request received from the service application 10.
(2) Function of outputting (issuing) a switching trigger for a vehicle control mode. The vehicle control mode defines behavior of the vehicle (usage of the vehicle as a product).
(3) Function of activating and stopping a power supply. The power supply operates a system necessary to fulfill a request.
(4) Function of providing an instruction to adjust energy sources in response to an entered energy demand (demand merging, demand weighting, suppliability determination, and selection of sources).
(5) Function of registering shared information in the information sharing portal 23. The shared information is processed and/or generated by using various types of data.
(6) Function of storing necessary information in a storage and operating communication devices inside and outside the vehicle.
(7) Timer function for activating a specified application at a set time.

For example, the command library 21 outputs a trigger for an instruction to switch the vehicle control mode, transmits an operation schedule, and reports scheduling to the mobility system controller 22 via the information sharing portal 23. The command library 21 outputs a control request or a service request (second command) to the integrated manager 24. The command library 21 includes a receiver. The receiver receives various service requests (first commands) from the service application 10. The command library 21 can provide the information sharing portal 23 with application modification information to be open to the public. The command library 21 can refer to shared information open to the public at the information sharing portal 23. The command library 21 can output a request to the vehicle device 30. The command library 21 can exchange information with the plant library 40.

### 3. Mobility System Controller 22

The mobility system controller 22 is a functional block configured to, for example, centrally manage a control status related to behavior of the vehicle (usage or operation), manage progress of a series of tasks based on an operation schedule, and manage schedules. For example, the mobility system controller 22 has the following management functions.

### (1) Vehicle control mode management function

The mobility system controller 22 manages overall control on the vehicle by using the following elements (plurality of modes and states). The mobility system controller 22 controls components of the vehicle device 30 and behavior of the system. The mobility system controller 22 adjusts UX requests depending on situations of the vehicle (time, place, and occasion: TPO). The mobility system controller 22 is an example of "second manager".

Main modes: determine the total usage of the vehicle depending on situations <automobile mode / electric mode / generator mode / stop mode> States: manage transition of vehicle states along with sequential control phases <traveling state (standby, start, travel, end) / motion state (hold, stop, startability determination, drive, stopping necessity determination) / transportation state (standby, stop, depart, move) / electric power infrastructure cooperation state (standby, ready, charge, supply)> Sub-modes: limit purposes and means of control under solely or a plurality of modes <driving sub-mode (manual, semi-automatic, full-automatic) / charging sub-mode (OFF, alternating current (AC), direct current (DC), contact, non-contact, solar) / equipment power supply sub-mode (OFF, electric service, movement preparation, loading and unloading of passengers, OTA) / auxiliary-device supplementation sub-mode (OFF, high voltage, solar) / AC power supply sub-mode (OFF, inside, outside)>

### (2) Schedule management (scheduler) function

The mobility system controller 22 schedules a start time and an end time of a specified activity or application. The mobility system controller 22 can schedule the start and end of an application corresponding to a single service or a plurality of successive services at any time. The transportation service may be taken as an example.

### (3) Operation management function

In the use of MaaS, the mobility system controller 22 manages progress of vehicle movement, transportation service (flows of persons and goods), stay service (preparation and use of space), and associated tasks (such as a conductor function) based on operation schedule tables. By reading an operation index and an operation schedule table for the transportation service, the mobility system controller 22 can manage progress of repetition of movement and stop in sequence. For example, the operation index contains information on coordinates of each station, a target time, and an associated task.

### (4) Fail operation (FOP) management function

Fail-safe and FOP are centrally managed in a personally owned vehicle (PoV) and in MaaS. For example, this function includes generation of reliability information of a main subsystem and system diagnosis as necessary.

The mobility system controller 22 outputs an instruction to permit or prohibit control and indices necessary for adjustment to the integrated manager 24. The mobility system controller 22 outputs a trigger to the information sharing portal 23. The trigger is an instruction for the service application 10 to activate an application. That is, the mobility system controller 22 is an example of "instructor". For example, the mobility system controller 22 acquires a trigger for an instruction to switch the vehicle control mode, an operation schedule, and scheduling from the command library 21 via the information sharing portal 23. The mobility system controller 22 can provide the information sharing portal 23 with mobility system information (such as a control mode, an operation status, and a UX adjustment result) to be open to the public. The mobility system controller 22 refers to shared information open to the public at the information sharing portal 23. The mobility system controller 22 can read an operation index and an operation schedule table from a predetermined information storage. The mobility system controller 22 can further provide mobility system information (such as a driving mode and a destination) to the driving application 50, and refer to information in the driving application 50.

### 4. Information Sharing Portal 23

The information sharing portal 23 is a functional block (first manager) configured to aggregate globally open information (shared information) for reference from the functional blocks such as the service application 10, the command library 21, the mobility system controller 22, and the integrated manager 24. The shared information can be referred also from the external cloud or control domains connected by communication from the vehicle integrated ECU (central ECU). Examples of the shared information include information on a state of the vehicle, information on a surrounding condition of the vehicle, information on scenes inside and outside the vehicle, information on results of detection of user's needs, information on input values from sensors, information on a current time, and information on a current location. Each functional block can refer to the shared information of the information sharing portal 23. When referring to the shared information, each functional block does not recognize the source of generation (provision) of the shared information. The information sharing portal 23 may include a coordinator that can process information on, for example, an operation status and a stopped state of the vehicle, a traveling scene of the vehicle (time, weather, and temperature), a result of authentication of a vehicle user, and a storage capacity.

The information sharing portal 23 opens the shared information to the service application 10, the command library 21, the mobility system controller 22, the integrated manager 24, the vehicle device 30, and the driving application 50. The information sharing portal 23 can acquire application modification information openable to the public from the command library 21. For example, the information sharing portal 23 can acquire, from the mobility system controller 22, mobility system information (such as a control mode, an operation status, a UX adjustment result, and an event request), a switching trigger, and an activation trigger openable to the public. The information sharing portal 23 can acquire an adjustment result openable to the public from the integrated manager 24. The information sharing portal 23 can acquire general information (about sensors, communications, and analog signals) openable to the public from the vehicle device 30. The information sharing portal 23 may function as a gateway configured to output the general information acquired from the vehicle device 30 directly to the service application 10. The information sharing portal 23 can acquire a driving status (such as a stop determination result) openable to the public from the driving application 50. The information open to the public at the information sharing portal 23 is basically registered (stored) in the vehicle. A part of the information may be registered (stored) in the cloud.

### 5. Integrated Manager 24

The integrated manager 24 is a functional block configured to execute adjustment related to, for example, limitation on a physical amount and whether to receive a request from the service application 10 (service API call), and determine a final command for the vehicle device 30 to fulfill the request. The adjustment is executed based on a control status of the mobility system controller 22 and various types of shared information that can be referred to at the information sharing portal 23. For example, the integrated manager 24 includes managers for the following functions. In this embodiment, the integrated manager 24 eliminates a difference caused by variations in equipment of the vehicle (hardware difference).

### (1) System activating/stopping manager (power supply manager) function

The integrated manager 24 controls activation and stop of a necessary system subordinate to the vehicle in response to a service need, and outputs a command (power ON/OFF, network management (NM) trigger, or communication request).

### (2) Power manager function

The integrated manager 24 efficiently controls consumption and supply of electric power, including charging, discharging, and voltage conversion in the vehicle. In this embodiment, the integrated manager 24 executes adjustment toward fair supply responding to all energy demands (electric power or electric energy) entered (including scheduling) in the vehicle, determines whether to permit a service, determines upper and lower limits of an electric power balance, and selects an electric power source (such as a high-voltage battery or a charger).

### (3) Heat manager function

The integrated manager 24 efficiently controls demand and supply of heat to be exhausted from the vehicle or used for heating. In this embodiment, the integrated manager 24 adjusts heat generation requests from the service application 10 (air conditioning or component temperature control). The integrated manager 24 outputs a command to start an engine or activate a fuel cell (FC) within a range in which fuel efficiency and emission requirements are satisfied.

### (4) Motion manager function

The integrated manager 24 adjusts requests for a motion system configured to control functions related to motions of the vehicle, such as "run", "turn", and "stop". In this embodiment, the integrated manager 24 reflects requirements in the mobility system controller 22 (traveling state, motion state, and transportation operation management) and new requests in the MaaS service (such as prohibition of start and request for or prohibition of termination of vehicle holding).

An instruction to permit or prohibit control and indices necessary for adjustment are input to the integrated manager 24 from the mobility system controller 22. A control request (or a service request) is input to the integrated manager 24 from the command library 21. The integrated manager 24 may function as a gateway configured to output the control request input from the command library 21 directly to the vehicle device 30. The integrated manager 24 outputs, to the vehicle device 30, adjusted commands for controlling devices (for actuators, communications, or driver outputs). That is, the integrated manager 24 is an example of "controller". The integrated manager 24 can provide the information sharing portal 23 with an adjustment result of each manager to be open to the public. The integrated manager 24 refers to, for adjustment, shared information open to the public at the information sharing portal 23. The integrated manager 24 can provide the driving application 50 with an answerback or an adjustment result of the motion manager, and refer to information related to a vehicle motion (such as an acceleration and a steering angle) requested by the driving application 50.

In addition to the managers described above, the integrated manager 24 may include, for example, a human machine interface (HMI) manager configured to control functions related to electric equipment control (usability) for appropriately displaying information on a navigation screen and meters of the vehicle and appropriately providing operations on the vehicle, or an upper manager configured to control functions related to electric equipment control other than that for a vehicle traveling system, such as headlights, wipers, and seats of the vehicle.

### 6. Vehicle Device 30

The vehicle device 30 is a functional block including devices such as sensors and actuators where control information, operation requests, data, and signals are input and output finally. Examples of the vehicle device 30 include a sensor configured to acquire information indicating a surrounding condition of the vehicle and information indicating a state of the vehicle, and a sensor configured to acquire information on driver's driving operations for the vehicle (such as operations on an accelerator, a brake, a steering wheel, and a shift lever). Examples of the vehicle device 30 also include a power supply driver configured to control a power supply for a power train or the like, Ethernet (registered trademark) connected to an advanced driver assistance system (ADAS), multimedia (MM), or the like, a controller area network (CAN) connecting the power train and a chassis, and a shift lock.

Adjusted commands (for actuators, communications, or driver outputs) are input to the vehicle device 30 from the integrated manager 24. The vehicle device 30 can provide the information sharing portal 23 with general information (about sensors, communications, and analog signals) to be open to the public. The service application 10 and the command library 21 can input requests to the vehicle device 30.

### 7. Plant Library 40

The plant library 40 is a functional block configured to provide environments such as artificial intelligence (AI) or machine learning algorithms, databases viewable from inside and outside of the vehicle, and a simulator configured to execute various simulations (such as estimation of a remaining charging period and map conversion) for use in improvement of controllability of the service application 10. The environments may partially or entirely be installed in the vehicle, or may be located in the cloud.

The plant library 40 can request necessary information from the service application 10, the command library 21, and the driving application 50 via a predetermined API. The plant library 40 can cause the service application 10, the command library 21, and the driving application 50 to acquire information indicating results of predetermined processes (such as simulations) via the predetermined API. The functions of the plant library 40 are basically installed in the vehicle, but may partially be executed in the cloud.

### 8. Driving Application 50

Among the applications installed in the vehicle, the driving application 50 is dedicated to driving of the vehicle and assistance of the driving, and is not included in the service application 10. Examples of the driving application 50 include remote driving such as autonomous parking, autonomous driving (AD), autonomous driving in MaaS (Autono-MaaS), and the advanced driver assistance system (ADAS).

The driving application 50 can refer to information open to the public at the mobility system controller 22 (such as a driving mode and a destination) via a predetermined vehicle driving API. The driving application 50 can cause the mobility system controller 22 to refer to information. The driving application 50 can provide a driving status (such as a stop determination result) to the information sharing portal 23 and acquire shared information (various types of data) open to the public at the information sharing portal 23 via the predetermined vehicle driving API. The driving application 50 can request a vehicle motion (such as an acceleration and a steering angle) toward the integrated manager 24 and receive an answerback (such as an adjustment result) from the integrated manager 24 via the predetermined vehicle driving API. The driving application 50 can exchange information with the plant library 40. Each application in the driving application 50 is basically executed in the vehicle, but may partially be executed in the cloud.

Since the vehicle control system of this embodiment includes the functional blocks described above, the vehicle control system can implement various services by simply installing applications developed without being aware of, for example, the structure of the control platform, the defined commands, the system configuration of the vehicle, and the energy system handled in the vehicle.

### Control

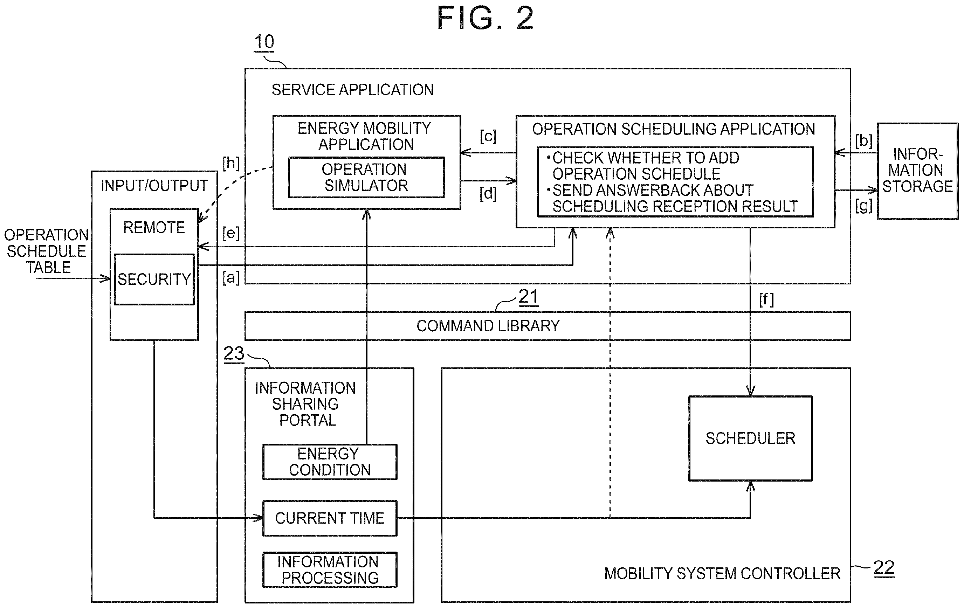

Specific examples of the services to be implemented in the vehicle control system of the present disclosure are described with reference to FIG. 2 to FIG. 10. The specific examples are directed to a case where the mobility system controller 22 (scheduler, operation management, and vehicle control mode management) manages progress of a transportation service, a stay service, or a complex service including those services (mobility service).

### Mobility Service: Operation Scheduling

FIG. 2 illustrates an example of a detailed process flow among the functional blocks when scheduling an operation of the mobility service. In the process flow exemplified in FIG. 2, an application (operation scheduling application) newly receives an operation schedule table from, for example, a database outside the vehicle ([a] in FIG. 2). The operation scheduling application is installed in the service application 10 from the mobility system controller 22. The operation scheduling application is unique to the mobility system. The operation schedule table is used for scheduling an operation of the vehicle. The operation schedule table is preferably received via a remote function unit with security.

When the operation schedule table is received, the operation scheduling application reads an existing operation schedule that has already been scheduled ([b] in FIG. 2). The existing operation schedule that has already been scheduled is stored in an information storage provided in the vehicle or outside the vehicle (located in the cloud). The operation scheduling application checks whether a new operation schedule based on the received operation schedule table and the existing operation schedule are established without conflict (butting).

When the existing operation schedule and the new operation schedule are established without conflict, the operation scheduling application transmits the operation schedules to an energy mobility application ([c] in FIG. 2). The energy mobility application is unique to the mobility system installed in the service application 10. The energy mobility application serves as an option of the scheduler that can check whether to add scheduling based on whether a scheduling conflict occurs with any other service. Whether a scheduling conflict occurs with any other service is determined based on simulations related to, for example, a required period and an energy consumption for a traveling route, an energy consumption for the stay service, and a required charging period at a specified facility for energy replenishment. The energy mobility application executes simulations related to operations based on the operation schedules transmitted from the operation scheduling application. Examples of the simulations related to operations include simulations as to whether the vehicle can go to a preceding or succeeding movement point, and whether the vehicle has an allowance for energy replenishment. A movement preparation service existing in PoVs, such as charging and pre-air conditioning, is managed as a different preceding or succeeding schedule.

The energy mobility application transmits results of the simulations executed by an operation simulator to the operation scheduling application ([d] in FIG. 2). Based on the results received from the energy mobility application, the operation scheduling application sends an answerback to, for example, a source of the operation schedule table as to whether to add the new operation schedule based on the operation schedule table ([e] in FIG. 2). When the new operation schedule based on the operation schedule table can be added, the operation scheduling application causes the scheduler to schedule, via an API command unique to the mobility system, the latest operation schedule by adding the new operation schedule to the existing operation schedule ([f] in FIG. 2). The operation scheduling application rewrites and updates the already scheduled operation schedule stored in the information storage with the latest operation schedule ([g] in FIG. 2).

The operation scheduling management executed by the operation scheduling application and the vehicle operation simulations executed by the energy mobility application may be executed in the cloud. In this configuration, only the scheduler and the information storage may be used on the vehicle side (In-Car side), and information necessary for reference may be acquired on the cloud side (Out-Car side) from the vehicle side ([h] in FIG. 2).

The specifications of an operation scheduling library are such that the library is open-source and updatable (for example, capable of reflecting a schedule change in the operation). The controllable range may be changed depending on the level of the vehicle user.

### Mobility Service: Start of Operation (Common)

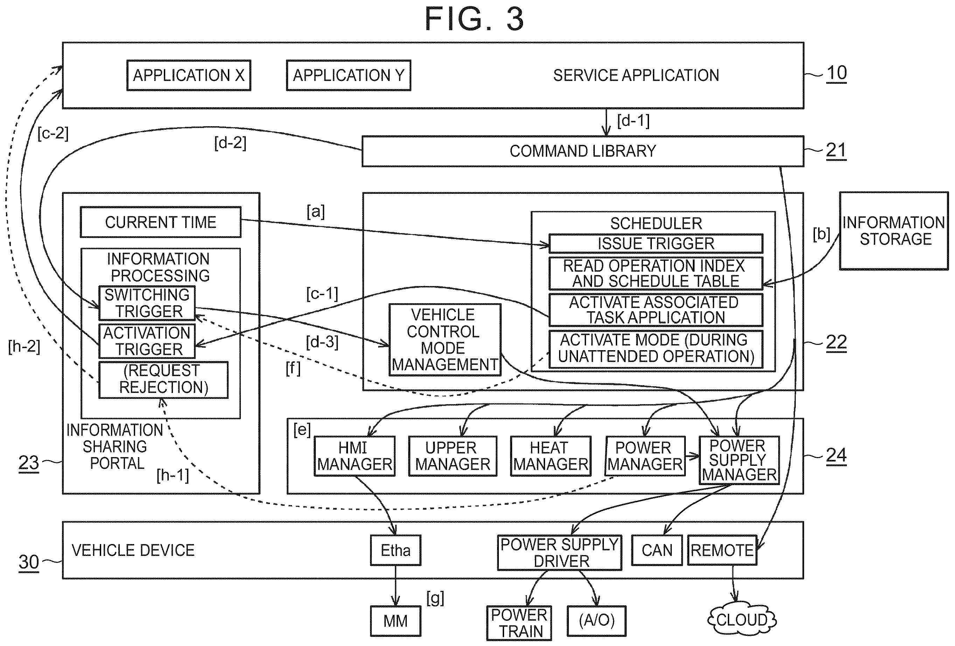

FIG. 3 illustrates an example of a detailed process flow among the functional blocks when starting the operation of the mobility service. In the process flow exemplified in FIG. 3, the scheduler of the mobility system controller 22 refers to a current time open to the public at the information sharing portal 23, and issues a trigger when the current time reaches a scheduled operation start time ([a] in FIG. 3). Along with the issuance of the trigger, the scheduler reads, for example, an operation index and a transportation operation schedule table stored in the information storage provided in the vehicle or outside the vehicle (located in the cloud) ([b] in FIG. 3).

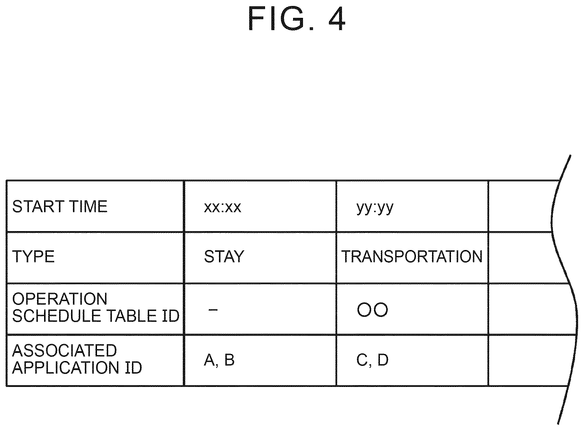

FIG. 4 illustrates an example of the operation index stored in the information storage. In the operation index exemplified in FIG. 4, a sequence of services is arranged in time series based on tasks and control modes (automobile mode or electric mode). The operation index is split based on types such as transportation (flows of persons and goods) and stay (preparation and use of space). For a target start time of each operation, a type such as transportation or stay is described. In a case of transportation, an identifier for identifying an operation schedule table (operation schedule table ID) and an identifier for identifying an application to be activated in association (associated application ID) are described.

The scheduler opens an activation trigger to the public at the information sharing portal 23.The scheduler activates applications in the service application 10 (application X and application Y) ([c-1, c-2] in FIG. 3). The application X and the application Y control associated tasks. The activated applications call commands to the command library 21 ([d-1] in FIG. 3). In response to the call, the command library 21 opens a switching trigger to the public at the information sharing portal 23 ([d-2] in FIG. 3). The mobility system controller 22 refers to the switching trigger open to the public at the information sharing portal 23, and switches the vehicle control mode to a corresponding vehicle control mode as appropriate ([d-3] in FIG. 3). In a scene of standard autonomous operation such as air conditioning activation or unattended transportation, the scheduler may directly instruct a management function unit to switch the vehicle control mode through the opening the switching trigger to the public at the information sharing portal 23 ([f, d-3] in FIG. 3).

The power supply manager of the integrated manager 24 activates a corresponding power supply based on the vehicle control mode transmitted from the mobility system controller 22 and an activity need ([e] in FIG. 3). For example, the HMI manager of the integrated manager 24 notifies, through the multimedia (MM), the service provider and the driver that the start time of the vehicle operation has come ([g] in FIG. 3).

When the supply of electric power cannot fulfill demand for the service (activity), the request may be rejected. In this case, the power manager of the integrated manager 24 registers request rejection in the information sharing portal 23 ([h-1] in FIG. 3). The applications in the service application 10 (application X and application Y) refer to the request rejection open to the public at the information sharing portal 23 ([h-2] in FIG. 3).

### Mobility Service: Termination of Operation (Stay Service)

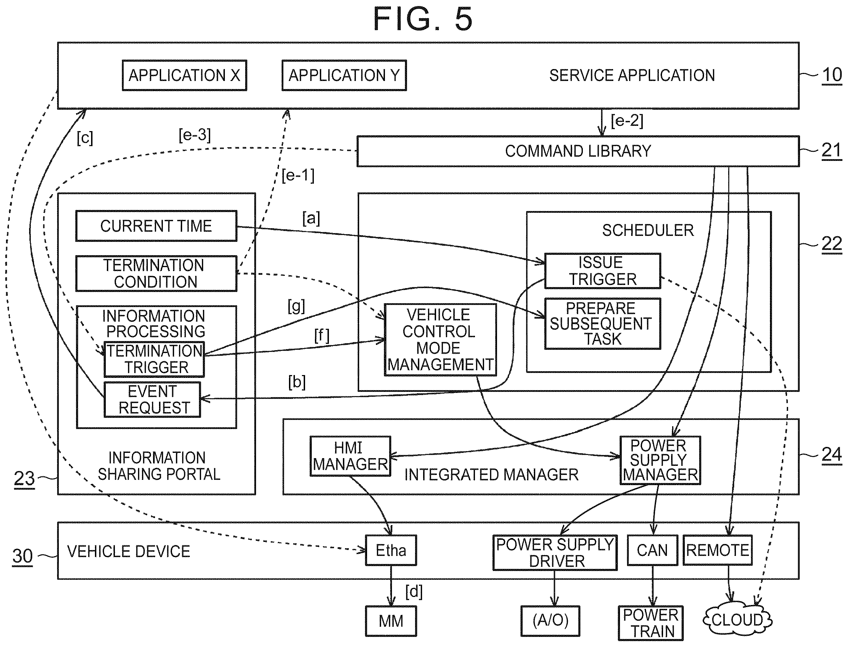

FIG. 5 illustrates an example of a detailed process flow among the functional blocks when terminating the operation of the mobility service. In the process flow exemplified in FIG. 5, the scheduler refers to a current time open to the public at the information sharing portal 23 ([a] in FIG. 5), and issues a reminder when the current time reaches a scheduled operation end time. Along with the issuance of the reminder, the scheduler opens a predetermined event request to the public at the information sharing portal 23 ([b] in FIG. 5). The associated applications (application X and application Y) refer to the event request open to the public at the information sharing portal 23, and execute an event ([c] in FIG. 5).

When the associated applications (application X and application Y) need to prompt the service provider or the driver to perform an action for terminating the vehicle operation, the applications notify, through the multimedia (MM), the service provider or the driver that the action is needed ([d] in FIG. 5).

When the information sharing portal 23 opens, to the public, information indicating that a vehicle operation termination condition is satisfied ([e-1] in FIG. 5), the associated applications (application X and application Y) call commands to the command library 21 ([e-2] in FIG. 5). In response to the call, the command library 21 opens a termination trigger to the public at the information sharing portal 23 ([e-3] in FIG. 5).

The mobility system controller 22 refers to the termination trigger open to the public at the information sharing portal 23 ([f] in FIG. 5), and terminates the operation mode in the vehicle control mode. The scheduler of the mobility system controller 22 prepares a subsequent task for transition to a subsequent service ([g] in FIG. 5). The operation mode may be terminated in synchronization with task processing in the event or under the same condition as that for task termination.

### Mobility Service: Operation in Transportation Service

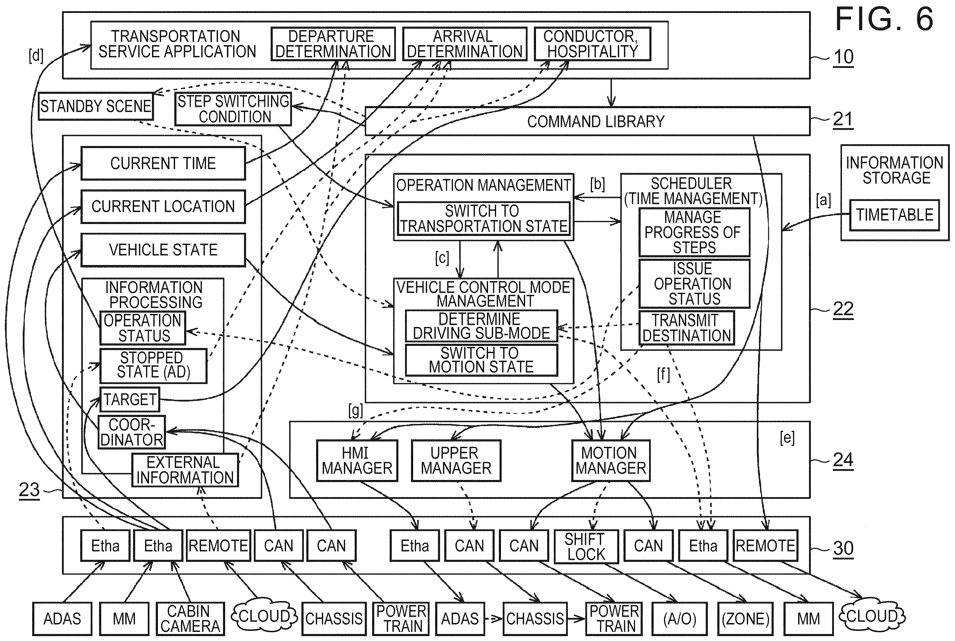

FIG. 6 illustrates an example of a detailed process flow among the functional blocks when executing an operation of the transportation service in the mobility service. In the process flow exemplified in FIG. 6, the scheduler of the mobility system controller 22 reads a timetable of an operation schedule stored in the information storage provided in the vehicle or outside the vehicle (located in the cloud) ([a] in FIG. 6).

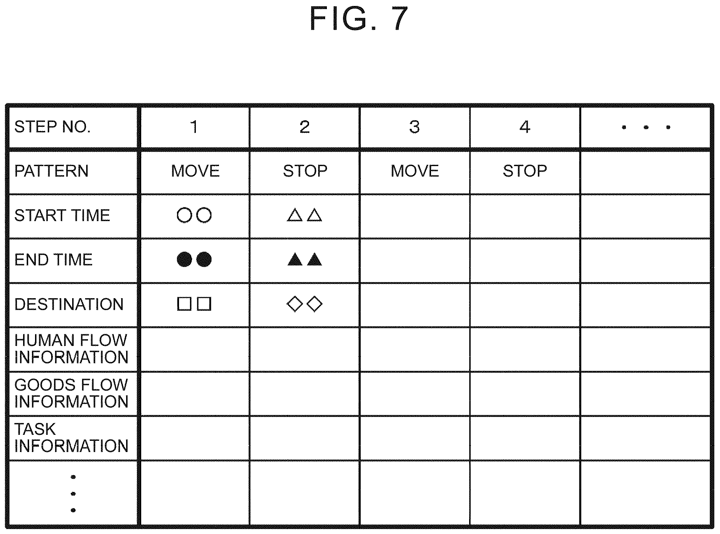

FIG. 7 illustrates an example of the timetable of the operation schedule stored in the information storage. In the example of FIG. 7, the information storage stores, for each step (step No.), an operation pattern in the step (pattern), a time to start an operation based on the pattern (start time), a time to terminate the operation based on the pattern (end time), a place intended in the step (destination), information related to a flow of persons in the step (human flow information), information related to a flow of baggage or the like in the step (goods flow information), and information related to a task in the step (task information).

Based on the read timetable of the operation schedule, the scheduler manages progress of steps in association with the transportation state in which the operation is managed by the mobility system controller 22 ([b] in FIG. 6). Further, the scheduler intervenes in the vehicle motion in association with the motion state in which the mode is managed by the mobility system controller 22 ([c] in FIG. 6).

In each step, the means and the associated task for determining the switching of the transportation state depend on a service type. Therefore, applications appropriate to the service types are selected in the service application 10 ([d] in FIG. 6). The applications to be selected may include transportation service applications such as an application dedicated to departure determination and an application dedicated to arrival determination. The application dedicated to departure determination (departure determination) causes an operation management function unit of the mobility system controller 22 to determine a switching trigger from stop to departure based on a condition related to a type or purpose of a service. The application dedicated to arrival determination (arrival determination) causes the operation management function unit of the mobility system controller 22 to determine a switching trigger from departure to stop based on a condition related to variations in driving means or acquired information. The transportation service applications may further include an energy replenishment schedule application for scheduling an energy replenishment schedule in advance in association with the operation schedule. The energy replenishment schedule application serves as an option of the scheduler.

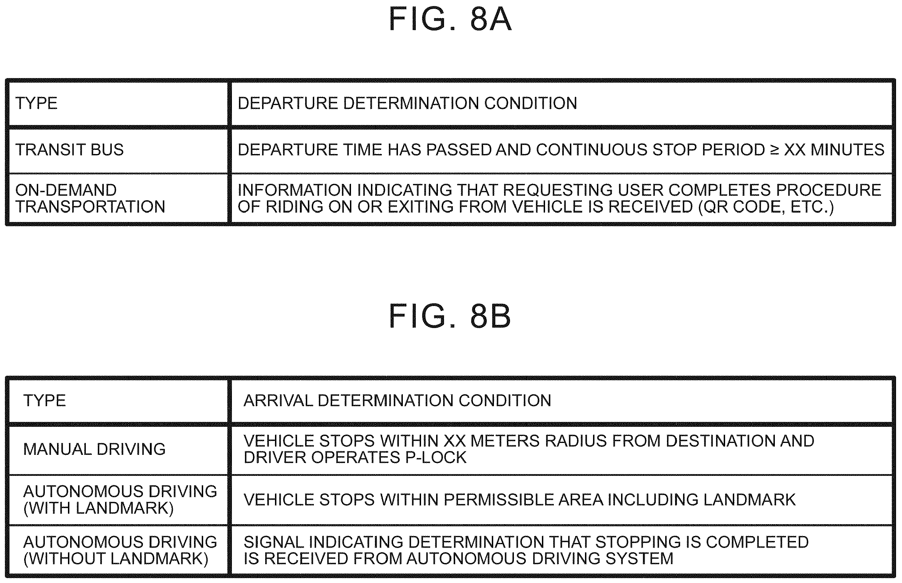

FIG. 8A and FIG. 8B illustrate examples of departure determination conditions and arrival determination conditions depending on the service types, respectively. Regarding the departure determination conditions, in a case where the service type is a transit bus, departure determination is made when a scheduled departure time has passed and a stopped state continues for a predetermined period or longer. In a case where the service type is on-demand transportation, departure determination is made in response to reception of information indicating that a user who requests use of the vehicle completes a procedure of riding on or exiting from the vehicle. Through the departure determination, the transportation state is switched from stop to departure (movement). Regarding the arrival determination conditions, in a case where the service type is manual driving, arrival determination is made when the vehicle stops within a predetermined distance from a destination and the driver fixes the shift lever of the vehicle at a parking position (P-lock). In a case where the service type is autonomous driving (with landmark), arrival determination is made when the vehicle stops within a predetermined permissible area including the landmark. In a case where the service type is autonomous driving (without landmark), arrival determination is made when a signal indicating determination that the stopping is completed is received from an autonomous driving system.

Based on a request and information output from the command library 21 and the mobility system controller 22, the integrated manager 24 executes appropriate adjustment in the motion manager, the upper manager, and the HMI manager, and outputs a command to the vehicle device 30 to fulfill the request ([e] in FIG. 6).

In a case where the vehicle is operating through the autonomous driving, a destination of the operation is transmitted from the scheduler of the mobility system controller 22 to the vehicle device 30 ([f] in FIG. 6). Information for determination about appropriateness of a stop position may also be transmitted from the scheduler to the vehicle device 30. In a case where the vehicle is operating through the manual driving, traveling guidance can be provided for the driver via, for example, a navigation device mounted on the vehicle by transmitting a destination of the operation from the scheduler of the mobility system controller 22 to the HMI manager of the integrated manager 24 ([g] in FIG. 6).

### Mobility Service: Charging Schedule

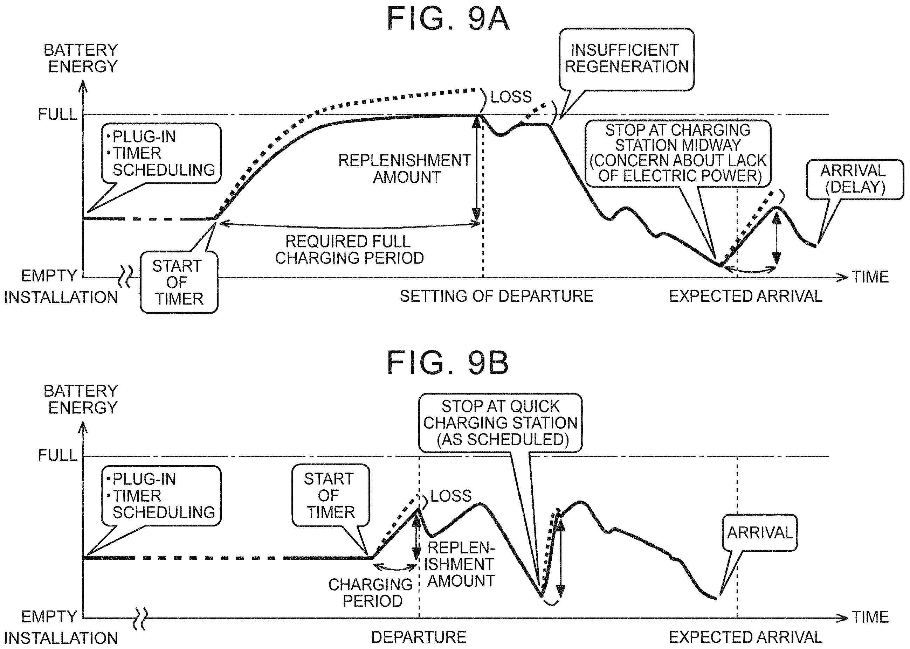

FIG. 9A and FIG. 9B are diagrams for describing examples of how to create charging schedules in the mobility service using simulators. FIG. 9A illustrates how to create a charging schedule by a related-art method (example of a typical pattern in a current PoV). FIG. 9B illustrates how to create a charging schedule by a method of the present disclosure.

In the related-art method (FIG. 9A), a user manually sets a departure time through back calculation from an arrival schedule. The timer function automatically sets a time to activate a charging function (timer-scheduled time) so that energy in an on-board battery is fully charged (full) at the departure time manually set by the user in a charging facility where the vehicle is plugged in before departure. That is, the timer-scheduled time is automatically set prior to the departure by estimating a required period to full charging.

In the method of the present disclosure (FIG. 9B), an operation route including a charging station (quick or normal) where the vehicle will stop midway is automatically determined by estimating an electric energy balance based on an arrival schedule. The mobility system controller 22 determines necessary and sufficient energy replenishment amounts of the on-board battery in the charging facility where the vehicle is plugged in before departure and the charging station where the vehicle will stop midway. Based on estimation of charging periods in the individual facilities, the mobility system controller 22 automatically sets a time to activate the charging function prior to the departure (timer-scheduled time).

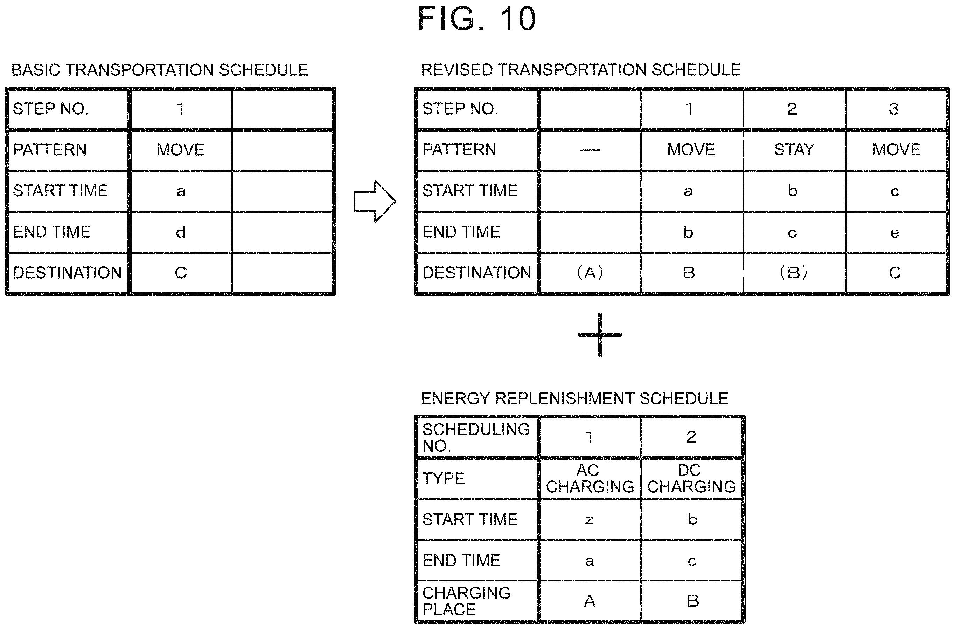

FIG. 10 illustrates an example of revision of the transportation schedule using a method of the present disclosure. As illustrated in FIG. 10, in a basic transportation schedule, the vehicle starts to move from a time "a" and arrives at a destination C before a time "d". In a revised transportation schedule, a change is made such that the on-board battery undergoes DC charging in a stay period from a time "b" to a time "c" at a destination B. Through the stay for charging, the time of arrival at the destination C is changed from the time "d" to a time "e". In addition to the revision of the transportation schedule, an energy replenishment schedule is added. In the energy replenishment schedule, the vehicle charging before the departure (scheduling No. 1) and the vehicle charging at the destination B (scheduling No. 2) are specified.

As illustrated in FIG. 9A, FIG. 9B, and FIG. 10, the method of the present disclosure can provide automation of the operation schedule that can achieve minimization of energy consumption in consideration of a loss, and maximization of an operating ratio of the vehicle through reduction of an immovable period of the vehicle due to charging.

### Effects etc.

As described above, the information processing device according to the embodiment of the present disclosure includes in advance the library of various commands that can automatically determine various types of control by simply calling predetermined abstract commands in a control architecture that can implement activities. Examples of the various types of control include the complex actuator operation adjustment, the power supply activation for activating a necessary system, the energy supply adjustment responding to energy demand (possibility determination and energy source selection), and the mode switching for determining the overall behavior of the vehicle.

Thus, application developers can easily develop a new or additional application (service) by designing an algorithm intuitively for its purpose. In the development, the application developers need not be aware of, for example, the structure of the electronic platform in the vehicle, the defined commands, the system configuration (hardware variations), and the energy system.

In the information processing device according to this embodiment, any function can be added by referring to the information in the sharing portal, using the command library, and installing a new or additional application alone. That is, there is no need to revise related applications.

The application developers can easily develop a new or additional application.

In the information processing device according to this embodiment, it is possible to avoid an increase in the number of inspection steps to find malfunction due to unexpected behavior of the vehicle or the number of inspection steps to check control interference.

In the information processing device according to this embodiment, an instruction is provided to start a necessary application based on the operation schedule of the vehicle that is checked that details of a plurality of schedules do not conflict with each other through the simulation. Thus, appropriate vehicle control can be achieved while securing consistency among a plurality of tasks.

Although the technology of the present disclosure is described above based on the embodiment, the present disclosure can be regarded not only as the information processing device, but also as, for example, a method to be executed by the information processing device including a processor and a memory, a program for the method, a non-transitory computer-readable recording medium storing the program, or a vehicle including the information processing device.

The present disclosure is useful in an information processing device to be mounted on a vehicle or the like.

## Claims

1. An information processing device to be mounted on a vehicle, the information processing device comprising a processor (20) configured to:
provide an activation instruction for an application based on an operation schedule of the vehicle;
receive a first command as a request from the application activated in response to the activation instruction;
convert the received first command into a second command used to control the vehicle for fulfilling the request; and
control a device mounted on the vehicle based on the second command.

2. The information processing device according to claim 1, wherein the processor (20) is configured to:
manage an external condition of the vehicle and an internal condition of the vehicle, the external condition of the vehicle and the internal condition of the vehicle including at least scene information; and
convert the first command into the second command based on the managed external condition and the managed internal condition.

3. The information processing device according to claim 1 or 2, wherein the processor (20) is configured to:
manage a control mode for providing at least an instruction for behavior of the vehicle; and
convert the first command into the second command based on the managed control mode.

4. An information processing method to be executed by a processor (20) of an information processing device to be mounted on a vehicle, the information processing method comprising:
providing an activation instruction for an application based on an operation schedule of the vehicle;
receiving a first command as a request from the application activated in response to the activation instruction;
converting the received first command into a second command used to control the vehicle for fulfilling the request; and
controlling a device mounted on the vehicle based on the second command.

5. A non-transitory storage medium storing instructions that are executable by one or more processors (20) of an information processing device to be mounted on a vehicle and that cause the one or more processors (20) to perform functions comprising:
providing an activation instruction for an application based on an operation schedule of the vehicle;
receiving a first command as a request from the application activated in response to the activation instruction;
converting the received first command into a second command used to control the vehicle for fulfilling the request; and
controlling a device mounted on the vehicle based on the second command.

6. A vehicle on which the information processing device according to any one of claims 1 to 3 is mounted.
